# EUROPÄISCHE PATENTSCHRIFT

(11) **EP 2 978 515 B1**
(45) Veröffentlichungstag und Bekanntmachung des Hinweises auf die Patenterteilung: **19.12.2018**
(21) Anmeldenummer: 14735837.8
(22) Anmeldetag: 28.03.2014
(51) Int. Cl.: B01D 1/14, B01D 1/18, B01J 2/04, F26B 3/12

(54) **VORRICHTUNG UND VERFAHREN ZUM HERSTELLEN VON DISPERSIONEN UND FESTSTOFFEN**
APPARATUS AND METHOD FOR THE PRODUCTION OF DISPERSIONS AND SOLID MATTER
DISPOSITIF ET MÉTHODE POUR PRODUIRE DES DISPERSIONS ET DES MATIÈRES SOLIDES

(30) Priorität: 28.03.2013 DE 102013005359; 15.07.2013 DE 102013011724
(43) Veröffentlichungstag der Anmeldung: 03.02.2016
(73) Patentinhaber: Instillo GmbH, 66740 Saarlouis (DE)
(72) Erfinder: PENTH, Bernd, 66822 Lebach (DE); PENTH, Felix, 66822 Lebach (DE); BAUMSTÜMMLER, Bernd, 66740 Saarlouis (DE); TÜRELI, Akif Emre, 66740 Saarlouis (DE)
(74) Vertreter: Vièl, Christof
(86) Internationale Anmeldenummer: PCT/DE2014/100109
(87) Internationale Veröffentlichungsnummer: WO 2014/154209

(56) Entgegenhaltungen:
- DE-A1-102009 008 478
- JP-A- 2008 182 911
- US-A- 4 702 799
- US-A1- 2004 139 908
- US-A1- 2013 012 551

## Beschreibung

Die Erfindung ist eine Vorrichtung gemäß Anspruch 1 und ein Verfahren gemäß Anspruch 4. Die Erfindung betrifft also unter anderem eine Vorrichtung zum Herstellen von Dispersionen und Feststoffen durch kontrollierte Fällung, Co-Fällung und Selbstorganisationsprozesse, umfassend einen Microjetreaktor und eine Sprühtrocknereinheit, wobei der Microjetreaktor so ausgestaltet ist, daß im Reaktorraum des Microjetreaktors jeweils ein Strahl eines Solvents, das mindestens ein Zielmolekül enthält, und eines Nonsolvents, die über Hochdruckpumpen gefördert werden, aus Düsen austreten und an einem Kollisionspunkt in einem Winkel von 90 bis 180° aufeinandertreffen, wobei der Microjetreaktor einen Gaseintritt zum Begasen des Reaktorraumes und einen Produktaustritt zum Austragen der Produkte in einem Gasstrom aufweist. Hierdurch erfolgt eine sehr schnelle Fällung, eine Co-Fällung oder eine chemische Reaktion, im Rahmen derer Mikro- oder Nanopartikel entstehen.

Sie betrifft also auch unter anderem ein Verfahren zum Herstellen von Dispersionen und Feststoffen durch kontrollierte Fällung, Co-Fällung und Selbstorganisationsprozesse in einem Microjetreaktor, wobei der Microjetreaktor so ausgestaltet ist, wobei jeweils ein Strahl eines Solvents, das mindestens ein Zielmolekül enthält, und eines Nonsolvents mit definierten Drücken und Flußraten im Reaktorraum des Microjetreaktors durch zwei sich gegenüberliegende Düsen gespritzt werden und in einem von einem Reaktorgehäuse umschlossenen Reaktorraum an einem Kollisionspunkt aufeinandertreffen, wobei über einen Gaseintritt der Reaktorraum begast wird und die Produkte durch einen Produktaustritt in einem Gasstrom ausgetragen werden.

Eine Vielzahl von Industriezweigen, insbesondere der Bereich der Medizin und Pharmazie, verzeichnen einen hohen Bedarf an Mikronisierung oder Nanoisierung von großen Partikeln. Besonders im Bereich der Pharmazie werden solche Methoden immer häufiger benutzt, um die Bioverfügbarkeit von Wirkstoffen zu erhöhen, oder um einen oder mehrere Wirkstoffe gezielt an seinen Wirkort zu bringen.

Unter Bioverfügbarkeit versteht man dabei den Grad, in dem ein Wirkstoff dem Zielgewebe nach seiner Verabreichung zur Verfügung gestellt werden kann. Es sind viele Faktoren bekannt, die die Bioverfügbarkeit beeinflussen können, wie beispielsweise die Löslichkeit der

Substanz in Wasser, die Freisetzungsrate oder die Partikelgröße. Somit kann die Bioverfügbarkeit durch Mikronisierung oder Nanoisierung im Falle schlecht wasserlöslicher Substanzen entweder durch die Erhöhung der Löslichkeit oder der Freisetzungsrate verbessert werden.

Eine andere Möglichkeit zur Erhöhung der Bioverfügbarkeit stellt das sogenannte "drug targeting" oder das "drug delivery" dar, welches auf der Verteilung der Partikel im Zielgewebe entsprechend ihrer Partikelgröße oder durch einen Aufbau der Partikel dergestalt beruht, dass sie über geeignete Oberflächenmodifikationen verfügen, die sie in die Lage versetzen, gezielt den Ort der Absorption oder Wirkung zu erreichen.

Solche Verfahren zur Herstellung von Mikropartikeln und Nanopartikeln werden in verschiedenen Patentanmeldungen und Patenten, beispielsweise der US 5,833,891 A, der US 5,534,270 A, der US 6,862,890 B, der US 6,177,103 B, der DE 10 2005 053 862 A1, der US 5,833,891 A, der US 5,534,270 A, der US 6,862,890 B, der US 6,177,103 B, der DE 10 2005 017 777 A1 und der DE 10 2005 053 862 A1 beschrieben.

In der WO 02/60275 A1 werden zur Herstellung von Nanopartikeln Verfahren beschrieben, bei denen zwei nicht mischbare Flüssigkeiten zur Erreichung einer Verkapselung elektrisch geladen werden. In diesem Falle ist die Verwendung toxischer Substanzen nicht ausgeschlossen, was zu einem beträchtlichen Einfluß auf die Produktqualität führen kann. Weiterhin ist es mit diesem Verfahren nicht möglich, die Partikelgröße zu kontrollieren.

In der US 2009/0214655 A1 werden wiederum zwei nicht mischbare Flüssigkeiten verwendet und obwohl dort zur Herstellung der Nanopartikel ein Mikroreaktor zum Einsatz kommt, wird hier nur die Herstellung von Emulsionen beschrieben. Darüber hinaus findet die Herstellung in einem flüssigkeitsgefüllten Raum statt, in dem es wiederum nicht möglich ist, die Partikelgröße oder -eigenschaften zu kontrollieren und weiterhin kann es aufgrund der Tatsache, daß die Reaktionen in Mikrokanälen durchgeführt werden, leicht zu Verblockung der Vorrichtung kommen.

Die bekannten Techniken für die Herstellung von Nanopartikeln weisen jedoch viele Nachteile auf.

Sogenannte "Top-down"- Techniken, die meist mechanische Zerkleinerungsverfahren umfassen, wie trockenes oder nasses Mahlen, bergen die Gefahr mikrobieller Kontamination, Kontamination durch Abrieb der Mahlkugeln oder Degradierung des Wirkstoffes, insbesondere, weil es für die Mikronisierung des Wirkstoffes sehr langer Mahlzeiten bedarf. Dennoch sind im Falle des trockenen Mahlens selbst nach sehr langen Mahlzeiten nur kleinste Partikelgrößen von etwa 100 Mikrometer erreichbar.

Es gibt eine Reihe von sogenannten "Bottom-up"-Ansätzen zur Produktion von Nanopartikeln, wie das Aussalzen, die Emulgierung, die Lösungsmittelverdampfung oder die Sprühverdampfung von superkritischen Flüssigkeiten.

Ungeachtet, welchen dieser Ansätze man verfolgt, um pharmazeutische Nanopartikel herzustellen, erreicht man in jedem Falle ein Vergrößerung der Oberfläche im Vergleich zu Partikeln mit einer Größe von mehr als 1 µm.

Die Vergrößerung der Oberfläche und der Oberflächeninteraktionen kann die Freisetzungsrate positiv beeinflussen und es ermöglichen, die pharmakokinetischen Eigenschaften eines Medikamentes zu kontrollierten. Dennoch sind den meisten dieser Verfahren dadurch Grenzen gesetzt, daß sie einen hohen Energieeinsatz erfordern, einen geringen Erfolg bringen, Probleme im "upscaling" (Übergang vom Laborexperiment zur industriellen Produktion) zeigen, es schwierig ist, Partikelgröße und -eigenschaften zu kontrollieren, relativ toxische, organische Lösungsmittel benutzt werden müssen oder die Methoden selbst schwierig durchzuführen sind. Diese Faktoren limitieren ihren Einsatz für die kommerzielle Produktion von Nanopartikeln.

Unter diesen verschiedenen Methoden wurde die Nano-Fällung oder Lösungsmittelaustausch-Methode in der US 5,118,529 A beschrieben. Diese relativ einfache Methode schließt die Bildung von Nanopartikeln mittels einer Solvent-Nonsolvent Fällung in einem Schritt mit ein. Im Idealfall wird das Polymer und der Wirkstoff im selben Lösungsmittel gelöst, um dann beim Kontakt mit dem Nonsolvent (meist Wasser) als Nanopartikel auszufallen.

Die schnelle Bildung von Nanopartikeln wird durch den Maragoni-Effekt als Resultat der Verwirbelungen am Kollisionspunkt des Solvents mit dem Nonsolvent und der Diffusion des Solvents in das Nonsolvent bedingt.

Die Fällung resultiert in der Produktion von Nanopartikeln in der Größenordnung von 100 bis 300 nm mit relativ enger Partikelgrößenverteilung unter Verwendung verschiedener Polymere. Oberflächenmodifikatoren werden dabei nicht in allen Fällen benötigt. Als Lösungsmittel werden normalerweise nur nicht giftige Lösungsmittel verwendet.

Der beschriebene Stand der Technik offenbart, daß insbesondere in der pharmazeutischen Industrie neuartige Methoden benötigt werden, die alle Nachteile, die mit den oben dargestellten konventionellen Methoden verbunden sind, vermeiden.

In der DE 10 2009 008 478 A1 wird ein Verfahren beschrieben, in dem eine Solvent-/Anti-Solvent-Fällung mit einer in-situ Sprühtrocknung in Anwesenheit von oberflächenaktiven Molekülen erfolgt, wobei ein Microjetreaktor entsprechend der EP 1 165 224 B1 zum Einsatz kommt. Ein solcher Microjetreaktor weist mindestens zwei sich gegenüberliegende Düsen mit jeweils zugeordneter Pumpe und Zuführleitung zum Spritzen jeweils eines flüssigen Mediums in einen von einem Reaktorgehäuse umschlossenen Reaktorraum auf einen gemeinsamen Kollisionspunkt auf, wobei eine erste Öffnung in dem Reaktorgehäuse vorgesehen ist, durch die ein Gas, eine verdampfende Flüssigkeit, eine kühlende Flüssigkeit oder ein kühlendes Gas zur Aufrechterhaltung der Gasatmosphäre im Reaktorinneren, insbesondere im Kollisionspunkt der Flüssigkeitsstrahlen, bzw. zur Kühlung der entstehenden Produkte einleitbar ist, und eine weitere Öffnung zum Entfernen der entstehenden Produkte und von überschüssigem Gas aus dem Reaktorgehäuse vorgesehen ist. Es wird also über eine Öffnung in den Reaktorraum ein Gas, eine verdampfende Flüssigkeit oder ein kühlendes Gas zur Aufrechterhaltung einer Gasatmosphäre im Reaktorinneren, insbesondere im Kollisionspunkt der Flüssigkeitsstrahlen, bzw. zur Kühlung der entstehenden Produkte eingeleitet und die entstehenden Produkte und überschüssiges Gas durch eine Öffnung aus dem Reaktorgehäuse durch Überdruck auf der Gaseintrittsseite oder durch Unterdruck auf der Produkt- und Gasaustrittsseite entfernt. Wenn in einem solchen Microjetreaktor eine Solven/Nonsolvent-Fällung, beispielsweise wie in der EP 2 550 092 A1 beschrieben, durchgeführt wird, erhält man eine Dispersion der gefällten Partikel. Mit einem solchen Reaktor gelingt es, besonders kleine Partikel zu generieren. Unter einer Solvent/Nonsolvent-Fällung versteht man in diesem Zusammenhang, daß ein Stoff in einem Solvent gelöst und als Flüssigkeitsstrahl mit einem zweiten Flüssigkeitsstrahl kollidiert, wobei der gelöste Stoff wieder gefällt wird. Nachteilig bei Solvent/Nonsolvent-Fällungen ist die Tatsache, daß sich der gelöste und wieder gefällte Stoff nach der Fällung partikulär in dem Solvent/Nonsolvent-Gemisch befindet. Dabei bewirkt der Solventanteil, daß sich bei vielen Partikeln zeitabhängig eine Ostwald-Reifung einstellt, die ein Wachstum der Partikel bewirkt.

Es ist demnach oft schwierig, die Partikelgröße in Dispersionen aus Solvent/Nonsolvent-Fällungen zu kontrollieren, insbesondere die zeitabhängige Zunahme der Partikelgröße zu verhindern.

In der DE 10 2009 008 478 A1 wird der Wirkstoff in einer wassermischbaren, organischen Phase gemeinsam mit einem oberflächenaktiven Molekül gelöst. Diese organische Lösung und Wasser, das als Nonsolvent dient, werden mit Hilfe von zwei Pumpen durch jeweils eigene Kapillaren aus rostfreiem Stahl mit konstanter Flußrate und Druck gepumpt und kollidieren im Mikroreaktor (dem sogenannten "Microjet-Reaktor") als "impinging jets" (senkrecht aufeinandertreffende Strahlen) miteinander. Lösungsmittel und Nonsolvent werden darin sehr schnell vermischt, wobei der Wirkstoff als Nanopartikel ausfällt und die so entstehende Nanopartikel-Suspension aus dem MicroJet-Reaktor entweder mit hoch erhitzter Druckluft oder einem Inertgas ausgetrieben wird.

Das Gas verdampft dabei das organische Lösungsmittel und das Wasser, wobei die Wirkstoff-Nanopartikel mit den oberflächenmodifizierenden Molekülen beschichtet sind, nachdem beide flüssigen Phasen verdampft sind. Am Ende des Verfahrens liegen die Nanopartikel als Pulver vor.

Essentielles Element in der DE 10 2009 008 478 A1 ist also die Nutzung erhitzter Luft oder Inertgas gemeinsam mit einem Oberflächenmodifikator dergestalt, daß während der Fällung des Wirkstoffes das Lösungsmittel und das Nonsolvent verdampft werden und die Oberflächenmodifikatoren die Nanopartikel umhüllen, um so die weitere Aggregation der Partikel und das Oswald-Wachstum zu verhindern.

Obwohl durch das in der DE 10 2009 008 478 A1 beschriebene Verfahren effizient die Partikelgröße kontrolliert werden kann, bedeutet die Notwendigkeit des Einsatzes von Oberflächenmodifikatoren eine Einschränkung bei der Nutzung der Technologie für verschiedene Produktionsstrategien von Mikropartikeln oder Nanopartikeln.

Die US 2013/0012551 A1 beschreibt die Beeinflussung der Partikelgröße im Rahmen eines Verfahrens zur Herstellung von Mikro- oder Nanopartikeln wasserlöslicher und wasserunlöslicher Substanzen durch kontrollierte Fällung, Co-Fällung und Selbstorganisationsprozesse in Microjetreaktoren.

Die US 2004/0139908 A1 betrifft die Herstellung kleiner Kristalle durch Mischen einer Lösung von der gewünschten Substanz mit einem Anti-Solvent in einem Vortex-Mischer mit kurzer Verweilzeit.

Sprühtrockner sind weit verbreitete Werkzeuge zur Herstellung von Feststoffen aus Lösungen durch Verdampfen des Lösungsmittels und beispielsweise bekannt aus der DE 40 28 341 A1. Mit Sprühtrocknern selbst lassen sich Lösungen oder Dispersionen aufkonzentrieren oder zu Trockenmaterialien verarbeiten, aber keine Solvent/Nonsolvent-Fällungen durchführen.

Die Aufgabe der vorliegenden Erfindung besteht darin, eine Vorrichtung zu schaffen, um Solvent/Nonsolvent-Fällungen so durchzuführen, daß möglichst kleine Partikel entstehen, die in der entstehenden Dispersion weitgehend frei sind von einer Ostwald-Reifung.

Diese Aufgabe wird bei einer erfindungsgemäßen Vorrichtung dadurch gelöst, daß sich an den Produktaustritt unmittelbar die Sprühtrocknereinheit anschließt, die als eine sich an den Produktaustritt des Microjetreaktors anschließende Rohrstrecke mit seitlicher Einspeisung eines oder mehrerer Luft- oder Inertgasströme ausgebildet ist, und ein Regelkreis zur Optimierung und Aufrechterhaltung der Betriebsparameter der Sprühtrocknereinheit vorgesehen ist, wobei über die Messung der Temperatur am Ende der Rohrstrecke der Sprühtrocknereinheit als Regelgröße die Temperatur Luft- oder Inertgasstromes und/oder der Volumenstrom des Luft- oder Inertgasstroms geregelt wird.

Entsprechend der Funktionsweise des Microjetreaktors erzeugt dieser einen Aerosol-Luftstrom, wobei die Aerosoltröpfchen aus Solvent/Nonsolventgemisch und darin dispergierten frisch gefällten Partikeln besteht. Das Alter der gefällten Partikel beträgt unmittelbar nach Austritt des Aerosols aus dem Microjetreaktor weniger als 100 msec.

Mit dem durchströmenden Gas wird das Aerosol in die anschließende Verdampferstrecke mit seitlicher Zuführung von leistungsgerecht erhitztem Gas, die Sprühtrocknereinheit, geblasen. Der Aerosol-Luftstrom mündet somit unmittelbar nach Austritt aus dem Reaktor in die Sprühtrocknereinheit.

Die Sprühtrocknereinheit besteht aus einer Rohrstrecke mit seitlicher Einspeisung eines oder mehrerer mengen- oder temperaturgeregelter Luft- oder Inertgasströme. Dieser Gasstrom nimmt die leicht verdampfenden Solventanteile der Aerosoltröpfchen bevorzugt auf, so daß das leichter siedende Solvent aus den Aerosoltröpfchen verdampft. Das verbleibende Aerosol wird als stabile, feinteilige Dispersion mit einer Partikelgröße meist unter 1 µm erhalten.

Die Lösefähigkeit der Aerosoltröpfchen für die gefällten Partikel wird mit der Abreicherung der Solventkomponente aus dem Solvent/Nonsolvent-Gemisch so herabgesetzt, daß die Ostwald-Reifung gestoppt wird. Zur Regelung wird die Temperatur am Ende der Rohrstrecke erfaßt, nachdem der Gasstrom gesättigt ist.

Durch die im Microjetreaktor angewandte Methode der Kollision der Strahlen (Solvent gegen Nonsolvent) unter erhöhtem Druck ist die Tropfengröße des Aerosoles abhängig vom System und Betriebsparametern, insbesondere der Düsengröße im Microjetreaktor und dem Pumpendruck der fördernden Pumpen für Solvent und Nonsolvent, meist kleiner als 100 µm. Kleinere Düsengrößen, beispielsweise 50 µm oder 100 µm und höhere Drücke, beispielsweise 10 bar bis 100 bar, ergeben feinere Aerosoltröpfchen, ebenso wie höhere Luftströme des Trägergases im Microjetreaktor, beispielsweise 30 l/min.

Der Regelkreis dient zur Optimierung und zur Aufrechterhaltung der Betriebsparameter, insbesondere der Regelung von Volumenstrom und Temperatur des Aerosolgasstromes. Über die Messung der Temperatur am Ende der Rohrstrecke der Sprühtrocknereinheit als Regelgröße wird der Leistungseintrag von Heizenergie in den Luft- oder Inertgasstrom, der seitlich in die Sprühtrocknereinheit eingespeist wird und somit die Temperatur des Luft- oder Inertgasstroms und/oder der Volumenstrom des Luft- oder Inertgasstroms geregelt. Durch die Verdampfung des Solvents und meist eines Teiles des Nonsolvents und der dadurch dem Aerosolstrom entzogenen Verdampfungswärme kühlt der Aerosolstrom ab. Kühlt der Aerosolstrom zu stark ab, verringert sich die Solventverdampfung. Wird der Aerosolstrom zu stark erhitzt, fallen die Partikel als Feststoffe an oder werden sogar thermisch zerstört.

Die geregelte Einspeisung von erhitztem Gas in die Sprühtrocknereinheit geschieht unabhängig von der (dem Microjetreaktor inhärenten) Einspeisung von meist nicht erhitztem Gas in den Microjetreaktor.

Es liegt im Rahmen der Erfindung, daß die Sprühtrocknereinheit Mittel zum Erhitzen des Luft- oder Inertgasstromes umfaßt.

Es ist zur Erfindung gehörig, daß die Strahlen des Solvents und des Nonsolvents in einem Winkel von 90 bis 180° aufeinandertreffen, wobei ein Winkel von 180° bevorzugt wird.

Die Aufgabe wird auch durch ein Verfahren zum Herstellen von Dispersionen und Feststoffen durch kontrollierte Fällung, Co-Fällung und Selbstorganisationsprozesse in einem Microjetreaktor gelöst, wobei jeweils ein Strahl eines Solvents, das mindestens ein Zielmolekül enthält, und eines Nonsolvents mit definierten Drücken und Flußraten im Reaktorraum des Microjetreaktors aus Düsen austreten und an einem Kollisionspunkt in einem Winkel von 90 bis 180° aufeinandertreffen, wobei der Microjetreaktor einen Gaseintritt zum Begasen des Reaktorraumes und einen Produktaustritt zum Austragen der Produkte in einem Gasstrom aufweist, wobei die aus dem Produktaustritt austretenden Produkte eine Sprühtrocknereinheit durchlaufen, die ausgebildet ist als eine sich unmittelbar an den Produktaustritt des Microjetreaktors anschließende Rohrstrecke mit seitlicher Einspeisung eines oder mehrerer Luft- oder Inertgasströme, wobei in einem Regelkreis die Betriebsparameter der Sprühtrocknereinheit geregelt werden.

In diesem Zusammenhang ist vorgesehen, daß die Sprühtrocknereinheit als Rohrstrecke ausgebildet ist, in die seitlich ein oder mehrere Luft- oder Inertgasströme eingespeist werden.

Es ist sowohl möglich, daß über die Messung der Temperatur am Ende der Rohrstrecke der Sprühtrocknereinheit als Regelgröße die Temperatur des Luft- oder Inertgasströme geregelt wird als auch, daß über die Messung der Temperatur am Ende der Rohrstrecke der Sprühtrocknereinheit als Regelgröße der Volumenstrom des bzw. der Luft- oder Inertgasströme geregelt wird. Eine Kombination beider Vorgehensweisen ist ebenfalls möglich.

In der bevorzugten Anwendung wird die Sprühtrocknung nicht bis zur Trocknung, sondern nur bis zu einer Aufkonzentrierung der Dispersion betrieben. Dabei wird also nur ein Teil des Solvent/Nonsolvent-Gemisches verdampft. Die Auswahl von Solvent und Nonsolvent erfolgt bevorzugt so daß das Solvent den höheren Sättigungsdruck besitzt und daher bevorzugt verdampft. Nach der Aufkonzentrierung ist das Solvent demnach aus der Dispersion weitgehend entfernt. Die Ostwald-Reifung ist dadurch zumindest erheblich reduziert.

In einer anderen Anwendung wird die Sprühtrocknung bis zur weitgehend vollständigen Trocknung betrieben. Durch Verwendung von Hilfsstoffen nach dem stoffspezifischen Stand der Technik kann das Agglomerieren verhindert werden.

Schließlich ist im Rahmen der Erfindung vorgesehen, daß lösemittelgesättigtes Gas von der entstehenden Dispersion getrennt wird.

Nachfolgend wird ein Ausführungsbeispiel der Erfindung anhand einer Zeichnung erläutert.

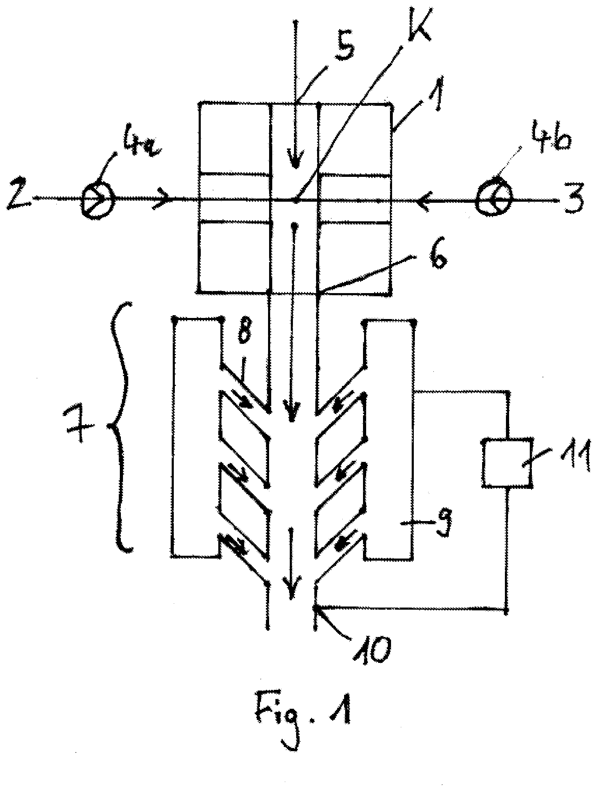

Es zeigt
- Fig. 1: eine schematische Darstellung einer erfindungsgemäßen Vorrichtung.

Im Reaktorraum 1 eines Microjetreaktors treten jeweils ein Strahl eines Solvents 2, das mindestens ein Zielmolekül enthält, und eines Nonsolvents 3, die über Hockdruckpumpen 4a, 4b gefördert werden, aus Düsen aus und treffen an einem Kollisionspunkt K aufeinander. Der Strahl des Solvents 2 und des Nonsolvents 3 werden mit Drücken von mehr als 50 bar, bevorzugt von mehr als 500 bar und besonders bevorzugt mit 1.000 bis 4.000 bar in den Reaktorraum gespritzt. Der Reaktorraum 1 des Microjetreaktors weist weiterhin einen Gaseintritt 5 zum Begasen des Reaktorraumes 1 und einen Produktaustritt 6 zum Austragen der Produkte in einem Gasstrom auf, wobei der Gaseintritt 5 und der Produktaustritt senkrecht zu der Richtung der Strahlen des Solvents 2 und des Nonsolvents 3 angeordnet ist. Die Strahlen des Solvents 2 und des Nonsolvents 3 treffen in einem Winkel von 180° aufeinander.

An den Produktaustritt 6 schließt sich unmittelbar eine Sprühtrocknereinheit 7 an, die als eine sich an den Produktaustritt 6 anschließende Rohrstrecke ausgebildet ist, in die seitlich über Zufuhrkanäle 8 ein oder mehrere Luft- oder Inertgasströme eingespeist werden. Diese Luft- oder Inertgasströme werden vorher in Mitteln 9 zum Erhitzen des bzw. der Luft- oder Inertgasströme erhitzt.

Weiterhin ist ein Regelkreis zur Optimierung und Aufrechterhaltung der Betriebsparameter der Sprühtrocknereinheit 7 vorgesehen, der wie folgt aufgebaut ist. Am Ende der Rohrstrecke der Sprühtrocknereinheit 7 ist ein Thermoelement 10 vorgesehen, mit dem die Temperatur des Produkt- und Gasstroms am Ende der Rohrstrecke der Sprühtrocknereinheit 7 gemessen wird. Diese Temperatur dient als Regelgröße. Über eine Regelung 11 wird in Abhängigkeit von der Temperatur am Ende der Rohrstrecke der Sprühtrocknereinheit 7 die Heizleistung der Mittel 9 zum Erhitzen des bzw. der Luft- oder Inertgasströme und somit die Temperatur des Luft- oder Inertgasstroms und/oder die Förderleistung der Mittel 9 zum Erhitzen des bzw. der Luft- oder Inertgasströme und somit der Volumenstrom des Luft- oder Inertgasstroms geregelt, so daß jeweils optimale Betriebsparameter vorliegen, um möglichst kleine Partikel zu erhalten, die in der entstehenden Dispersion weitgehend frei sind von einer Ostwald-Reifung.

Die Auswahl von Solvent und Nonsolvent erfolgt möglichst so, daß der Solvent den höheren Dampfdruck aufweist und daher bevorzugt verdampft. Die Lösefähigkeit der Aerosoltröpfchen für die gefällten Partikel wird mit der Abreicherung der Solventkomponente aus dem Solvent/Nonsolvent-Gemisch so herabgesetzt, daß die Ostwald-Reifung gestoppt oder zumindest erheblich reduziert wird.

Durch die Verdampfung des Solvents und meist eines Teiles des Nonsolvents und der dadurch dem Aerosolstrom entzogenen Verdampfungswärme kühlt der Aerosolstrom ab. Kühlt der Aerosolstrom zu stark ab, verringert sich die Solventverdampfung. Wird der Aerosolstrom zu stark erhitzt, fallen die Partikel als Feststoffe an oder werden sogar thermisch zerstört. Der Regelkreis stellt sicher, daß die Temperatur des Aerosolstroms optimal ist.

Es ist sowohl möglich, die Sprühtrocknung nicht bis zur Trocknung, sondern nur bis zu einer Aufkonzentrierung der Dispersion zu betreiben als auch die Sprühtrocknung bis zur weitgehend vollständigen Trocknung zu betreiben.

## Patentansprüche

1. Vorrichtung zum Herstellen von Dispersionen und Feststoffen durch kontrollierte Fällung, Co-Fällung und Selbstorganisationsprozesse, umfassend einen Microjetreaktor und eine Sprühtrocknereinheit, wobei der Microjetreaktor so ausgestaltet ist, daß im Reaktorraum des Microjetreaktors jeweils ein Strahl eines Solvents, das mindestens ein Zielmolekül enthält, und eines Nonsolvents, die über Hochdruckpumpen gefördert werden, aus Düsen austreten und an einem Kollisionspunkt (K) in einem Winkel von 90 bis 180° aufeinandertreffen, wobei der Microjetreaktor einen Gaseintritt (5) zum Begasen des Reaktorraumes (1) und einen Produktaustritt (6) zum Austragen der Produkte in einem Gasstrom aufweist, **dadurch gekennzeichnet, daß** sich an den Produktaustritt (6) unmittelbar die Sprühtrocknereinheit (7) anschließt, die als eine sich an den Produktaustritt (6) des Microjetreaktors anschließende Rohrstrecke mit seitlicher Einspeisung eines oder mehrerer Luft- oder Inertgasströme ausgebildet ist, und ein Regelkreis (11) zur Optimierung und Aufrechterhaltung der Betriebsparameter der Sprühtrocknereinheit (7) vorgesehen ist, wobei über die Messung der Temperatur am Ende der Rohrstrecke der Sprühtrocknereinheit (7) als Regelgröße die Temperatur des Luft- oder Inertgasstromes und/oder der Volumenstrom des Luft- oder Inertgasstroms geregelt wird.

2. Vorrichtung gemäß Anspruch 1, **dadurch gekennzeichnet, daß** die Sprühtrocknereinheit (7) Mittel (9) zum Erhitzen des Luft- oder Inertgasstromes umfaßt.

3. Vorrichtung gemäß Anspruch 1 oder 2, **dadurch gekennzeichnet, daß** die Strahlen des Solvents (2) und des Nonsolvents (3) in einem Winkel von 90 bis 180° aufeinandertreffen.

4. Verfahren zum Herstellen von Dispersionen und Feststoffen durch kontrollierte Fällung, Co-Fällung und Selbstorganisationsprozesse in einem Microjetreaktor, wobei der Microjetreaktor so ausgestaltet ist, wobei jeweils ein Strahl eines Solvents (2), das mindestens ein Zielmolekül enthält, und eines Nonsolvents (3) mit definierten Drücken und Flußraten im Reaktorraum (1) des Microjetreaktors aus Düsen austreten und an einem Kollisionspunkt (K) in einem Winkel von 90 bis 180° aufeinandertreffen, wobei der Microjetreaktor einen Gaseintritt (5) zum Begasen des Reaktorraumes (1) und einen Produktaustritt (6) zum Austragen der Produkte in einem Gasstrom aufweist, **dadurch gekennzeichnet, daß** die aus dem Produktaustritt (6) austretenden Produkte eine Sprühtrocknereinheit (7) durchlaufen, die ausgebildet ist als eine sich unmittelbar an den Produktaustritt (6) des Microjetreaktors anschließende Rohrstrecke mit seitlicher Einspeisung eines oder mehrere Luft- oder Inertgasströme, wobei in einem Regelkreis (11) die Betriebsparameter der Sprühtrocknereinheit (7) geregelt werden.

5. Verfahren gemäß Anspruch 4, **dadurch gekennzeichnet, daß** über die Messung der Temperatur am Ende der Rohrstrecke der Sprühtrocknereinheit (7) als Regelgröße die Temperatur des Luft- oder Inertgasströme geregelt wird.

6. Verfahren gemäß Anspruch 5, **dadurch gekennzeichnet, daß** über die Messung der Temperatur am Ende der Rohrstrecke der Sprühtrocknereinheit (7) als Regelgröße der Volumenstrom des bzw. der Luft- oder Inertgasströme geregelt wird.

7. Verfahren gemäß den Ansprüchen 4 bis 6, **dadurch gekennzeichnet, daß** die Sprühtrocknung nicht bis zur Trocknung, sondern nur bis zu einer Aufkonzentrierung der Dispersion betrieben wird.

8. Verfahren gemäß den Ansprüchen 4 bis 6, **dadurch gekennzeichnet, daß** die Sprühtrocknung bis zur weitgehend vollständigen Trocknung betrieben wird.

9. Verfahren gemäß den Ansprüchen 4 bis 6, **dadurch gekennzeichnet, daß** die Auswahl von Solvent (2) und Nonsolvent (3) so erfolgt, daß der Solvent (2) den höheren Sättigungsdruck aufweist.

10. Verfahren gemäß den Ansprüchen 4 bis 9, **dadurch gekennzeichnet, daß** lösemittelgesättigtes Gas von der entstehenden Dispersion getrennt wird.

## Claims

1. Apparatus for producing dispersions and solids by way of controlled precipitation, coprecipitation and self-organisation processes, including a microjet reactor and a spray-drier unit, wherein the microjet reactor is configured in such a way that, in the reactor chamber of the microjet reactor, a jet of solvent containing at least one target molecule and a jet of nonsolvent, which are conveyed by high-pressure pumps, exit from nozzles and collide at a collision point (K) at an angle of 90° to 180°, wherein the microjet reactor has a gas inlet (5) for introducing gas into the reactor chamber (1) and an product outlet (6) for discharging the products in a stream of gas,
**characterised in that** the product outlet (6) is followed immediately by the spray-drier unit (7), which is configured as a length of piping adjoining the product outlet (6) of the microjet reactor and supplied from the side with one or more streams of air or inert gas, and that a feedback control system (11) is provided to optimise and maintain the operating parameters for the spray-drier unit (7), the temperature of the stream of air or inert gas and/or the volumetric flow rate of the stream of air or inert gas being regulated via measurement of the temperature, as a controlled variable, at the end of the length of piping constituting the spray-drier unit (7).

2. Apparatus according to claim 1,
**characterised in that** the spray-dryer unit (7) includes means (9) for heating the stream of air or inert gas.

3. Apparatus according to either of the claims 1 and 2,
**characterised in that** the jets of solvent (2) and nonsolvent (3) collide with each other at an angle of 90 to 180°C.

4. Method of producing dispersions and solids by way of controlled precipitation, coprecipitation and self-organisation processes in a microjet reactor, wherein the microjet reactor is configured in such a way that, in the reactor chamber (1) of the microjet reactor, a jet of solvent (2) containing at least one target molecule and a jet of nonsolvent (3) exit from nozzles at specified pressures and flow rates and collide at a collision point (K) at an angle of 90 to 180°, wherein the microjet reactor has a gas inlet (5) for introducing gas into the reactor chamber and an product outlet (6) for discharging the products in a stream of gas,
**characterised in that** the products exiting from the product outlet (6) pass through a spray-drier unit (7) configured as a length of piping directly adjoining the product outlet (6) and supplied from the side with one or more streams of air or inert gas, the operating parameters for the spray-drier unit (7) being controlled via a feedback control system (11).

5. Method according to claim 4,
**characterised in that** the temperature of the stream(s) of air or inert gas is controlled via measurement of the temperature, as controlled variable, at the end of the length of piping constituting the spray-drier unit (7).

6. Method according to claim 5,
**characterised in that** the volumetric flow rate of the stream(s) of air or inert gas is controlled via measurement of the temperature, as controlled variable, at the end of the length of piping constituting the spray-drier unit (7).

7. Method according to claims 4 to 6,
**characterised in that** spray-drying is only continued long enough to concentrate the dispersion but not to dry it.

8. Method according to claims 4 to 6,
**characterised in that** spray-drying is continued until the dispersion is, for the most part, completely dry.

9. Method according to claims 4 to 6,
**characterised in that** the solvent (2) and nonsolvent (3) are selected such that the solvent (2) has the higher saturation pressure.

10. Method according to claims 4 to 9,
**characterised in that** the solvent-saturated gas is separated from the dispersion being formed.

## Revendications

1. Appareil pour la production de dispersions et de matières solides par précipitation contrôlée, co-précipitation et processus d'auto-organisation, comprenant un réacteur à micro-jets et une unité de séchage par pulvérisation, le réacteur à micro-jets étant conçu de telle sorte que dans la chambre de réacteur du réacteur à micro-jets, un jet d'un solvant contenant au moins une molécule cible et un jet d'un non-solvent, lesquels sont transportés par des pompes à haute pression, sortent de buses et entrent en collision en un point de collision (K) sous un angle de 90 à 180°, le réacteur à micro-jets présentant une entrée de gaz (5) pour remplir de gaz la chambre de réacteur (1) et une sortie de produits (6) pour décharger les produits dans un flux de gaz, **caractérisé en ce que** l'unité de séchage par pulvérisation (7) est directement raccordée à la sortie de produits (6), laquelle unité de séchage par pulvérisation est réalisée sous la forme d'une section de conduite raccordée à la sortie de produits (6) du réacteur à micro-jets et munie d'une alimentation latérale d'un ou plusieurs flux d'air ou de gaz inerte, et un circuit de commande (11) est prévu pour optimiser et maintenir les paramètres de fonctionnement de l'unité de séchage par pulvérisation (7), la température du flux d'air ou de gaz inerte et/ou le débit volumique du flux d'air ou de gaz inerte étant régulé en tant que grandeur régulée par la mesure de la température à l'extrémité de la section de conduite de l'unité de séchage par pulvérisation (7)

2. Dispositif selon la revendication 1, **caractérisé en ce que** l'unité de séchage par pulvérisation (7) comprend des moyens (9) pour chauffer le flux d'air ou de gaz inerte.

3. Dispositif selon la revendication 1 ou 2, **caractérisé en ce que** les faisceaux du solvant (2) et du non-solvant (3) entrent en collision sous un angle de 90 à 180°.

4. Procédé de production de dispersions et de matières solides par précipitation contrôlée, co-précipitation et processus d'auto-organisation dans un réacteur à micro-jets, le réacteur à micro-jets étant conçu de telle sorte qu'un jet d'un solvant (2) contenant au moins une molécule cible et un jet d'un non-solvant (3) sortent de buses à des pressions et des débits définis dans la chambre de réacteur (1) du réacteur à micro-jets et entrent en collision sous un angle de 90 à 180° en un point de collision (K), le réacteur à micro-jets ayant une entrée de gaz (5) pour remplir de gaz la chambre de réacteur (1), et une sortie de produits (6) pour décharger les produits dans un courant gazeux, **caractérisé en ce que** les produits sortant de la sortie de produits (6) passent à travers une unité de séchage par pulvérisation (7) qui est conçue sous la forme d'une section de conduite directement qui est raccordée à la sortie de produits (6) du réacteur à micro-jets et qui est munie d'une alimentation latérale d'un ou plusieurs flux d'air ou de gaz inerte, les paramètres de fonctionnement de l'unité de séchage par pulvérisation (7) étant commandés dans un circuit de commande (11).

5. Procédé selon la revendication 4, **caractérisé en ce que** la température des flux d'air ou de gaz inerte est régulée en tant que grandeur régulée par la mesure de la température à l'extrémité du tronçon de conduite de l'unité de séchage par pulvérisation (7).

6. Procédé selon la revendication 5, **caractérisé en ce que** le débit volumique du ou des flux d'air ou de gaz inerte est régulé en tant que grandeur régulée par la mesure de la température à l'extrémité de la section de conduite de l'unité de séchage par pulvérisation (7).

7. Procédé selon les revendications 4 à 6, **caractérisé en ce que** le séchage par pulvérisation n'est pas effectué jusqu'au séchage, mais seulement jusqu'à ce que la dispersion soit concentrée.

8. Procédé selon les revendications 4 à 6, **caractérisé en ce que** le séchage par pulvérisation est effectué jusqu'à un séchage pratiquement complet.

9. Procédé selon les revendications 4 à 6, **caractérisé en ce que** le solvant (2) et le non-solvant (3) sont choisis de telle sorte que le solvant (2) a la pression de saturation la plus élevée.

10. Procédé selon les revendications 4 à 9, **caractérisé en ce que** le gaz saturé en solvant est séparé de la dispersion résultante.
